# EUROPÄISCHE PATENTANMELDUNG

(11) **EP 0 718 080 A1**
(43) Veröffentlichungstag der Anmeldung: **26.06.1996**
(21) Anmeldenummer: 95810606.4
(22) Anmeldetag: 28.09.1995
(51) Int. Cl.: B28D 1/12, B23D 61/06

(54) **Sägeblatt**

(30) Priorität: 22.12.1994 DE 4445909
(71) Anmelder: HILTI Aktiengesellschaft, FL-9494 Schaan (LI)
(72) Erfinder: Benz, Gottfried, FL-9494 Schaan (LI)
(74) Vertreter: Wildi, Roland

(57) **Zusammenfassung**

Es ist ein Sägeblatt mit austauschbaren Schneidsegmenten beschrieben, welches ein scheibenförmiges Stammblatt (1) mit am Aussenrand angeordneten, in regelmässigem Abstand voneinander radial ausgerichteten Ausnehmungen (7) umfasst und Schneidsegmente (2) aufweist, die jeweils einen Schneidkörper (4) und einen Segmentträger (3) aufweisen, welcher in einer der Ausnehmungen mit Hilfe von lösbaren Befestigungsmitteln (5) fixierbar ist. Die Ausnehmungen (7) im Stammblatt (1) sind derart ausgebildet, dass die Schneidsegmente (2) radial einsetzbar sind. Die Befestigungsmittel (5) für die Segmentträger (3) sind axial anbringbar. Zudem sind Sicherungselemente (6) vorgesehen, welche ein axiales Verschieben der Segmentträger (3) in den Ausnehmungen (7) verhindern.

## Beschreibung

Die Erfindung betrifft ein Sägeblatt mit austauschbaren Schneidsegmenten gemäss Oberbegriff des Patentanspruchs 1.

Für die Durchführung von Trenn- und Korrekturarbeiten, für das Erstellen von grossen Wanddurchbrüchen, für Abbrucharbeiten oder für die Steinbearbeitung werden in der Bauindustrie vielfach sogenannte Wandsägen eingesetzt. Diese umfassen eine motorisch antreibbare Sägevorrichtung mit einem axial rotierbaren Sägeblatt. Das Sägeblatt besteht im wesentlichen aus einem Stammblatt und aus am Umfang des Stammblattes verteilten Schneidsegmenten. Die Schneidsegmente können Hartmetallsegmente sein; vielfach kommen Schneidsegmente mit eingebetteten Diamantkörnern zum Einsatz. Im Einsatz greifen die Schneidsegmente in den zu bearbeitenden Werkstoff ein. Während das Stammblatt eine grosse Standzeit aufweist, verschleissen die Schneidsegmente je nach der Art des bearbeiteten Werkstoffes relativ rasch. Auch kann es vorkommen, dass ein oder mehrere Schneidsegmente durch die beim Sägen auftretenden Scherkräfte vom Stammblatt abgelöst werden. Es besteht daher die Notwendigkeit, die Schneidsegmente auszutauschen oder zu ersetzen.

In der Vergangenheit wurden die Schneidsegmente üblicherweise am Umfang des Stammblattes aufgelötet oder durch Laserschweissen befestigt. Der Austausch oder der Ersatz von Schneidsegmenten war relativ aufwendig. Insbesondere bestand immer die Gefahr, dass das Stammblatt durch die beim Löten oder Schweissen auftretenden lokalen Temperaturbelastungen in seinem Rundlauf beeinträchtigt wurde. Vielfach musste daher das Stammblatt nach dem Ersatz oder dem Austausch von Schneidsegmenten wieder durch spezielle thermische und mechanische Behandlung ausgerichtet werden. In der US-A-3,122,030 ist ein speziell konstruiertes Sägeblatt beschrieben, das zwischen den die Schneidsegmente tragenden Bereichen Ausnehmungen aufweist, welche die beim Auflöten oder Aufschweissen der Schneidsegmente auftretenden lokalen Wärmemengen ableiten sollen. Nach dem Aufbringen der Schneidsegmente werden in diese Ausnehmungen Einsatzteile eingespannt, welche dem Sägeblatt die erforderliche Steifigkeit verleihen sollen. Dieser Lösungsansatz verbessert zwar die Wärmeabfuhr in geringem Umfang, ist aber sehr aufwendig. Ausserdem besteht die Gefahr, dass die Ausnehmungen während des Löt-oder Schweissvorgangs der Schneidsegmente verformt werden, was zu Problemen beim Anbringen der passgenau ausgebildeten Einsätze führen kann. Um der Gefahr möglicher Verformungen des Stammblatts durch die lokale Wärmeeinwirkung beim Löten oder Schweissen der Schneidsegmente vorzubeugen, wurde vorgeschlagen, die Schneidsegmente mit Hilfe von lösbaren Befestigungsmitteln am Stammblatt zu fixieren.

In der EP-A-0 542 023 ist dazu vorgeschlagen, die Schneidsegmente in schlitzfömigen Aufnahmen eines scheibenförmigen Trägers im Klemmsitz zu haltern, der auswechselbar in einem radial ausgerichteten Einschnitt am Aussenrand des Stammblatts angeordnet ist. Der Träger ist mit einer radialen Gewindebohrung zur Aufnahme einer Spannschraube versehen. Die stiftartig ausgebildeten Schneidelemente werden radial in die schlitzförmigen Aufnahmen des scheibenförmigen Trägers eingesetzt und werden durch die radiale Spannschraube in den Aufnahmen geklemmt. Während die Schneidelemente auf diese Weise durch die Spannschraube einigermassen in radialer Richtung fixiert sind, besteht die Gefahr, dass sie durch die auftretenden Axial und Scherkräfte in axialer Richtung ausweichen. In diesem Fall können sie in den Aufnahmen axial verkippen und abgeschert werden. Der scheibenförmige Träger besteht aus einem elastischen Kunststoff. An seinen beiden Schmalseiten sind bogenförmige Ansätze angeordnet, die in Kammem des Sägeblatts ragen, um den Träger in radialer und in axialer Richtung innerhalb des Stammblatts zu fixieren. Durch die im Betrieb auftretenden axialen und radialen Kräfte und durch die Scherkräfte besteht die Gefahr einer Verformung des elastischen Trägers, wodurch ein Festsitz innerhalb des Stammblattes nicht mehr gegeben ist. Auch besteht die Gefahr eines axialen Verkippens des Trägers, wodurch dieser aus dem Stammblatt abgeschert werden kann.

Bei dem in der DE-A-25 06 742 beschriebenen Sägeblatt mit austauschbaren Schneidsegmenten besteht das Schneidsegment aus einem Schneidkörper und einem den Schneidkörper tragenden Fussteil. Das Stammblatt weist an seinem Umfang etwa radial ausgerichtete Ausnehmungen mit einer Hinterschneidung auf. Das in seiner Form mit der Ausnehmung korrespondierende Fussteil ist axial in die Ausnehmung einsetzbar. Das Fussteil ist jeweils mit einem Längsschlitz zur Bildung zweier Schenkel versehen, die durch ein dazwischen im Bereich einer Erweiterung des Schlitzes eingreifendes axiales Spreizglied auseinandergespreizt werden, so dass sich die Schenkel klemmend an die hinterschnittenen Seitenwände der Ausnehmung legen. Während auf diese Weise durch die Hinterschneidung die Schneidsegmente in radialer Richtung fixiert sind, besteht die Gefahr, dass sie durch die im Betrieb auftretenden Axial- und Scherkräfte in den Ausnehmungen axial verkippen und abgeschert werden.

Aufgabe der vorliegenden Erfindung ist es daher, ein Sägeblatt mit austauschbaren Schneidsegmenten dahingehend zu verbessern, dass die Schneidsegmente zuverlässig am Stammblatt fixiert sind. Die Schneidsegmente sollen trotz des Angriffs von axialen und radialen Kräften und von Scherkräften fest am Stammblatt gehaltert sein. Zugleich soll ein einfacher Austausch der Schneidsegmente ohne lokale Wärmebeanspruchung des Stammblattes ermöglicht sein. Der Austausch der Schneidsegmente soll direkt am Einsatzort und nach Möglichkeit sogar ohne Demontage des Sägeblatts erfolgen können, auf ein anschliessendes aufwendiges Neueinrichten des Sägeblatts soll verzichtet werden können.

Diese Aufgaben werden durch ein Sägeblatt mit auswechselbaren Schneidsegmenten gelöst, welches die im kennzeichnenden Teil des Patentanspruchs 1 aufgelisteten Merkmale aufweist. Insbesondere wird durch die Erfindung ein Sägeblatt mit austauschbaren Schneidsegmenten geschaffen, welches ein scheibenförmiges Stammblatt mit am Aussenrand angeordneten, in regelmässigem Abstand voneinander radial ausgerichteten Ausnehmungen umfasst und Schneidsegmente aufweist, die jeweils einen Schneidkörper und einen Segmentträger umfassen, welcher in einer der Ausnehmungen mit Hilfe von lösbaren Befestigungsmitteln fixierbar ist. Die Ausnehmungen im Stammblatt sind derart ausgebildet, dass die Schneidsegmente radial einsetzbar sind. Die Befestigungsmittel für die Segmentträger sind axial anbringbar. Zudem sind Sicherungselemente vorgesehen, welche ein axiales Verschieben der Segmentträger in den Ausnehmungen verhindern. Die Ausbildung der Ausnehmungen für ein radiales Einsetzen der Schneidsegmente, die Sicherungselemente gegen axiales Ausweichen und die axial anbringbaren, lösbaren Befestigungsmittel gewährleisten eine Fixierung der Schneidsegmente sowohl in axialer als, auch in radialer Richtung. Die Halterung der in das Stammblatt einggesetzten Schneidsegmente ist gegenüber dem Angriff von axialen und radialen Kräften und von Scherkräften unempfindlich. Die Schneidsegmente sind einfach durch Lösen und Wiederanbringen der Befestigungsmittel austauschbar. Eine lokale Wärmebeanspruchung des Stammblatts wird vermieden. Das Austauschen der Schneidsegmente ist ohne grössen Kraftaufwand bewerkstelligbar und kann am montierten Sägeblatt erfolgen. Ein neuerliches Einrichten des Sägeblatts nach dem Austausch von Schneidsegmenten ist nicht erforderlich.

Die Sicherungselemente für die Segmentträger umfassen in einem ersten Ausführungsbeispiel wenigstens einen Passstift, der am Boden der Ausnehmung bzw. am Segmentträger vorgesehen ist und mit einer korrespondierenden Bohrung am Segmentträger bzw. im Stammblatt zusammenwirkt. Der Passstift und die axial eingesetzten Befestigungsmittel sichern den Segmenthalter sowohl in axialer als auch in radialer Richtung. Zugleich erleichtert der Passstift das radiale Einsetzen des Segmentträgels in die Ausnehmung, da der Segmentträger durch den Passstift geführt ist und dadurch nicht verkanten kann. Besonders vorteilhaft sind zwei Passstifte und zwei korrespondierende Bohrungen, die hintereinander angeordnet sind. Die zwei Passstifte gewährleisten in diesem Fall die axiale Sicherung, während die axialen Befestigungsmittel für die radiale Fixierung verantwortlich sind.

In einer besonders bevorzugten alternativen Ausführungsvariante sind die Sicherungselemente durch prismatische Führungen gebildet, welche am Sitz für den Segmentträger am Stammblatt und/oder an den Stirnseiten der Ausnehmungen bzw. an den Schmalseiten der Segmentträger ausgebildete prismatische Vorsprünge und korrespondierende Nuten an den Schmalseiten der Segmentträger bzw. am Stammblatt und/oder an den Stirnseiten der Ausnehmungen umfassen. Die prismatischen Führungen für die Segmentträger verhindern ein axiales Ausweichen der Segmentträger unter Belastung. Zugleich gewährleisten sie einen exakten Sitz. An dieser Stelle sei bemerkt, dass auch eine Kombination von Passstiften und prismatischen Führungen als Sicherungselemente vorgesehen sein kann.

Vorzugsweise sind die lösbaren Befestigungsmittel in axialen Durchsteckbohrungen befestigbar, welche jeweils durch Halbbohrungen im Bereich der Ausnehmungen im Stammblatt und durch Halbbohrungen in den Segmentträgem gebildet sind. Dabei sind die Befestigungsmittel derart ausgebildet, dass sie im eingesetzten Zustand die Segmentträger durch Spreizkräfte in den Ausnehmungen fixieren. Die Befestigungsmittel können auf diese Weise nicht nur die im Betrieb auftretenden Fliehkräfte aufnehmen, sie sorgen zugleich für ein Verspreizen der Segmentträger in den Ausnehmungen.

In einer ersten Ausführungsvariante sind die Befestigungsmittel konisch ausgebildet Dabei weist der hintere Bereich des Konus gegenüber den Durchsteckbohrungen ein Übermass von etwa 0,5 mm bis etwa 0,7 mm auf. Vorzugsweise sind die Befestigungsmittel jeweils als Vollniet ausgebildet bzw. sind sie durch zwei Halbniete gebildet. Die konische Ausbildung erlaubt ein einfaches Anstecken des Befestigungsmittels. Die Spreizkraft wird erst durch vollständiges Eintreiben des Befestigungsmittels ausgeübt, wenn der hintere Bereich des Konus mit Übermass die beiden Halbbohrungen auseinanderdrückt. Dadurch wird der Segmentträger gegen die gegenüberliegende Stirnwand der Ausnehmung gepresst und in der Ausnehmung verspreizt.

In einer besonders bevorzugten Ausführungsvariante umfassen die Befestigungsmittel jeweils eine Durchsteckschraube und eine Mutter, welche beim Verschrauben eine Vorspannung des Segmentträgers in der Ausnehmung bewirken. Die Durchsteckschraube ist beispielsweise mit einem Innensechskant versehen und kann auf diese. Weise mit einem einfachen Hilfsmittel gelöst und wieder angezogen werden. Der Kopf der Durchsteckschraube und die Mutter sind konisch ausgebildet. Die Neigungswinkel der konischen Anschlagflächen des Schraubenkopfes und der Mutter betragen etwa 40° - 70°, vorzugsweise etwa 60°. Dadurch, dass die korrespondierenden Anschlagbereiche der Halbbohrungen eine gringere Neigung aufweisen, kommt es zu einer Spreizwirkung, wenn die Durchsteckschraube und die Mutter vollständig miteinander verschraubt werden.

Vorzugsweise sind die Befestigungsmittel in Drehrichtung des Sägeblatts vor dem Segmentträger angeordnet. Auf diese Weise unterstützen die gegen die Drehrichtung auf die Segmentträger wirkenden Scherkräfte und die Trägheitskräfte die Spreizwirkung der Befestigungsmittel.

Eine motorisch antreibbare Schneidevorrichtung insbesondere zum Trennen von Baustoffen, wie beispielsweise armierten oder nicht armierten Beton oder Stein, die mit einem erfindungsgemässen Sägeblatt ausgestattet ist, weist eine hohe Sicherheit gegen ein Ablösen von Schneidsegmenten auf. Die Schneidsegmente sind sicher gehaltert und können sich im Betrieb nicht axial verkanten oder radial verschieben. Die Schneidsegmente können ohne aufwendige Hilfsmittel gewechselt werden. Ein Ausbau des Sägeblatts aus der Schneidevorrichtung ist nicht unbedingt erforderlich. Durch die Erfindung ist ein Austausch von einzelnen Stecksegmenten oder eine Neubestückung des gesamten Sägeblattes mit neuen Stecksegmenten vor Ort ermöglicht.

Im folgenden wird die Erfindung mit allen ihr als wesentlich zugehörigen Einzelteilen anhand von Ausführungsbeispielen näher erläutert. Es zeigen in schematischer Darstellung:
- Fig. 1: eine perspektivische Darstellung eines ersten Ausführungsbeispiel der Erfindung,
- Fig.2: eine Seitenansicht des ersten Ausführungsbeispiels der Erfindung in zusammengefügtem Zustand,
- Fig. 3: eine Schnittdarstellung gemäss Schnittlinie III-III in Fig. 2,
- Fig.4: eine Seitenansicht eines zweiten Ausfühwngsbeispiels der Erfindung in zusammengefügtem Zustand und
- Fig. 5: eine Schnittdarstellung gemäss Schnittlinie V-V In Fig. 4.

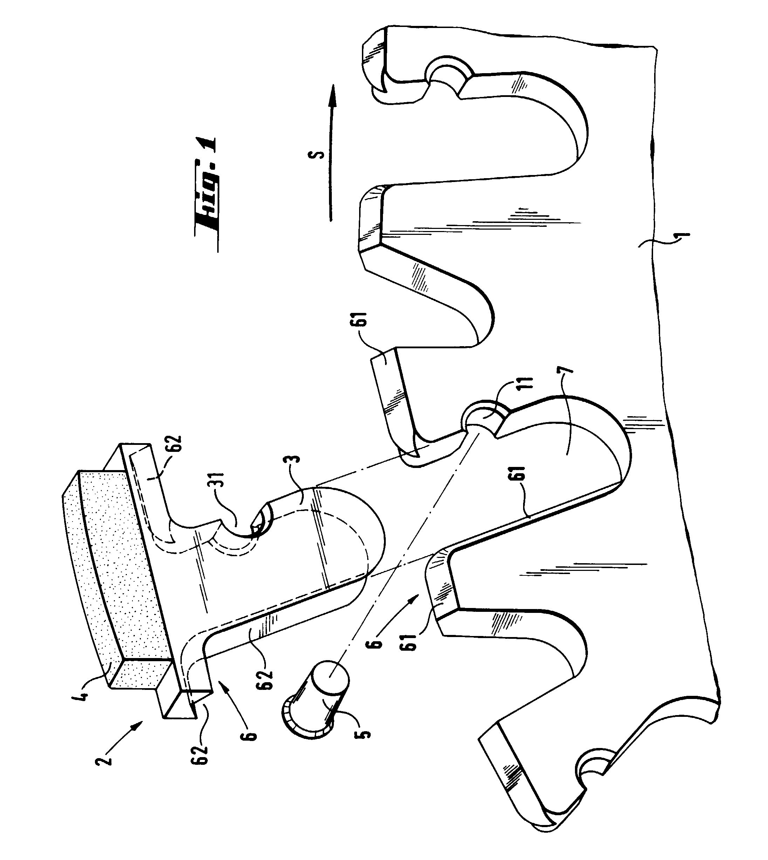

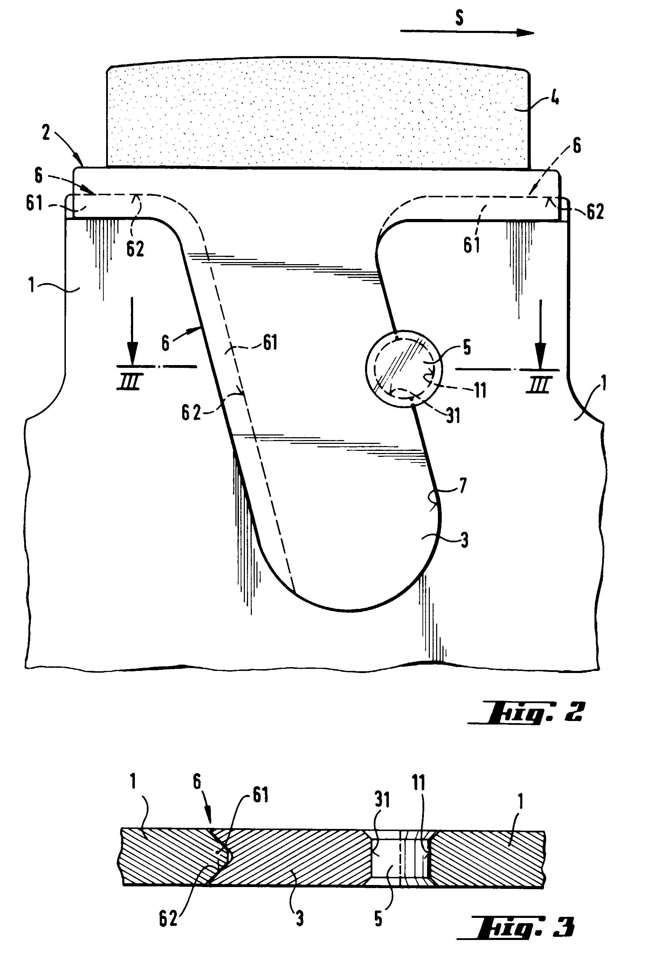

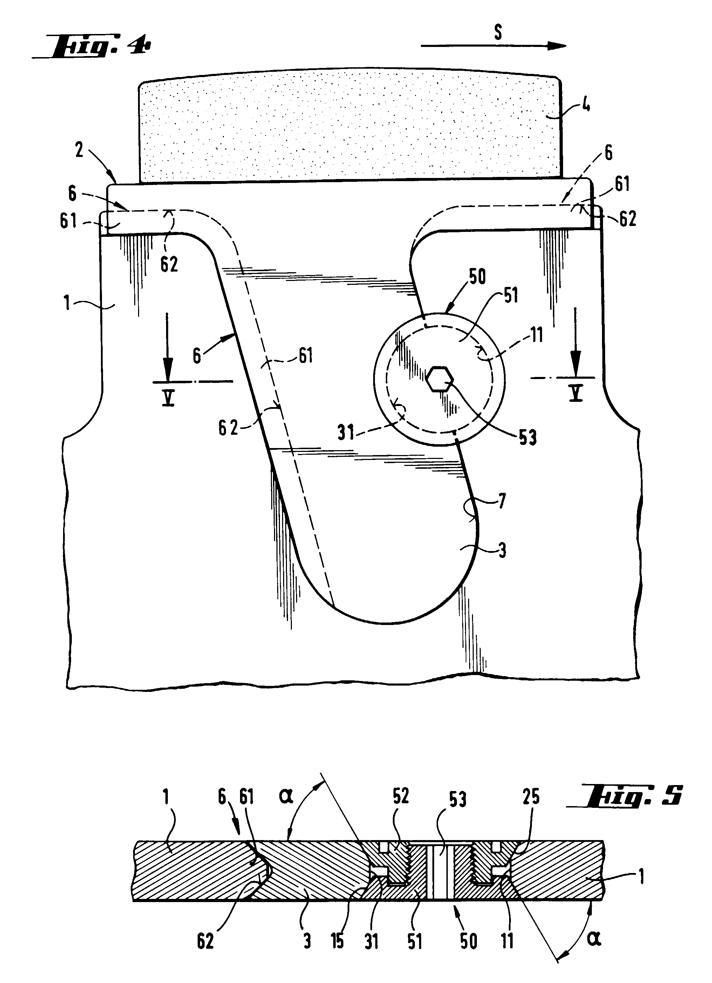

Ein Ausschnitt eines erstes Ausführungsbeispiels des erfindungsgemässen Sägeblatts mit austauschbaren Schneidsegmenten ist in Fig. 1 explodiert perspektivisch und in den Figs. 2 und 3 jeweils in zusammengefügtem Zustand in Seitenansicht bzw. im Schnitt dargestellt. Das Sägeblatt umfasst ein Stammblatt 1, welches entlang seines Umfangs mit etwa radial ausgerichteten Ausnehmungen 7 versehen ist. Eine dieser Ausnehmungen 7 ist in den Figs. 1-3 angedeutet. In Fig. 1 ist ein Schneidsegment 2 oberhalb der Ausnehmung 7 dargestellt. Das Schneidsegment 2 umfasst einen Schneidkörper 4, der über den Umfang des Sägeblatts hinausragt und im Betrieb in Eingriff mit dem zu schneidenden Werkstoff steht, und einen Segmentträger 3, der in die Ausnehmung eingesteckt ist. Das Schneidsegment 4 kann aus Hartmetall oder ein mit Diamantkörnern versehener Verbundkörper sein.

Erfindungsgemäss ist die Ausnehmung 7 derart gestaltet, dass das Schneidsegment 2 radial vom Umfang des Sägeblatts her einsteckbar ist Ein axial einsteckbares Befestigungsmittel 5 fixiert den Segmentträger 3 in der Ausnehmung 7, so dass dieser radial nicht mehr verrückbar ist. Sicherungselemente 6 verhindern, dass der Segmentträger 3 axial ausweicht. In dem dargestellten Ausführungsbeispiel handelt es sich bei den Sicherungselementen um eine prismatische Führung, die durch prismatische Vorsprünge 61 an der Stirnfläche der Ausnehmung 7 und am Sitz für den Segmentträger 3 am Stammblatt 1 und durch korrespondierende Nuten 62 an den Anlagebereichen des Segmentträgers 3 gebildet sind. Selbstverständlich kann die Anordnung der Nuten und der korrespondierenden Vorsprünge auch umgekehrt sein.

In einer nicht dargestellen Ausführungsvariante, die aber unmittelbar einsichtig ist, sind die Sicherungselemente durch wenigstens einen radialen Passstift und eine korrespondierende Bohrung gebildet, welche an der Ausnehmung bzw. am Segmentträger oder umgekehrt vorgesehen sind. Eine bevorzugte Ausführungsvariante der Sicherungselemente 6 umfasst zwei Passstifte und zwei korrespondierende Bohrungen. Auch können Kombinationen von Passstiften mit zugehörigen Bohrungen und von prismatischen Führungen vorgesehen sein.

Das radial einsteckbare Befestigungsmittel 5 ist im dargestellten Fall ein konisch ausgebildeter Niet. Der Niet ist in eine Durchgangsbohrung einsteckbar, die sich axial erstreckt und aus einer Halbbohrung 31 im Segmentträger 3 und einer Halbbohrung 11 im Stammblatt 1 zusammengesetzt ist. Im hinteren Konusbereich weist der Niet gegenüber der Durckgangsbohrung ein Übermass von.etwa 0,5 mm bis etwa 0,7 mm auf.

Wenn der Niet vollständig eingesteckt ist, übt er eine Spreizkraft auf den Segmentträger 3 aus und drückt dessen Schmalseite gegen die gegenüberliegende Stirnwand der Ausnehmung, wodurch er in der Ausnehmung verspannt wird. Anstelle eines einzelnen Vollniets können auch zwei Halbniete als axiales Befestigungsmittel 5 verwendet werden. Die Halbniete werden dann von gegenüberliegenden Seiten axial in die Durchgangsbohrungen eingesteckt. Ihre Spreizwirkung entfalten sie dadurch, dass beim Übereinandergleiten der beiden Halbniete der Gesamtdurchmesser des Befestigungselements gegenüber der Durchgangsbohrung ein Übermass aufweist.

Das in den Figs. 4 und 5 dargestellte zweite Ausführungsbeispiel des Sägeblatts mit austauschbaren Schneidsegmenten gleicht in seinem grundsäzlichen Aufbau dem ersten Ausführungsbeispiel. Der Unterschied besteht in der Ausbildung der Befestigungsmittel 50. Im vorliegenden Fall umfassen die Befestigungsmittel 50 eine Durchsteckschraube 51 und eine damit zusammenwirkende Mutter 52. Die Durchsteckschraube 51 weist ein konisches Kopfteil auf. Die Mutter 52 ist gleichfalls konisch ausgebildet. Die Neigungswinkel α der konischen Anschlagflächen 15 bzw. 25 des Kopfes der Durcksteckschraube 51 und der Mutter 52 betragen etwa 40° - 70°, vorzugsweise etwa 60°. Dadurch, dass die korrespondierenden Anschlagbereiche der Halbbohrungen eine gringere Neigung aufweisen, kommt es zu einer Spreizwirkung, wenn die Durchsteckschraube 51 und die Mutter 52 vollständig miteinander verschraubt werden. Ein Innensechskant 53 in der Durcksteckschraube 51 erlaubt ein einfaches Lösen und Festziehen der Schraube - Mutter Kombination. Die Befestigungsmittel 50 sind bevorzugt in Drehrichtung S des Sägeblatts vor dem Segmentträger 3 angeordnet. Auf diese Weise unterstützten die gegen die Drehrichtung auf die Segmentträger 3 wirkenden Scherkräfte und die Trägheitskräfte die Spreizwirkung der Befestigungsmittel 50.

Die erfindungsgemässe Ausbildung des Sägeblatts mit austauschbaren Schneidsegmenten gewährleistet eine Fixierung der Schneidsegmente sowohl in axialer als auch in radialer Richtung. Die Halterung der in das Stammblatt eingesetzten Schneidsegmente ist gegenüber dem Angriff von axialen und radialen Kräften und von Scherkräften unempfindlich. Die Schneidsegmente sind einfach durch Lösen und Wiederanbringen der Befestigungsmittel austauschbar. Eine lokale Wärmebeanspruchung des Stammblatts wird vermieden. Das Austauschen der Schneidsegmente ist ohne grössen Kraftaufwand bewerkstelligbar und kann am montierten Sägeblatt erfolgen. Ein neuerliches Einrichten des Sägeblatts nach dem Austausch von Schneidsegmenten ist nicht erforderlich.

Eine motorisch antreibbare Schneidevorrichtung insbesondere zum Trennen von Baustoffen, wie beispielsweise armiertem oder nicht armiertem Beton oder Stein, die mit einem erfindungsgemässen Sägeblatt ausgestattet ist, weist eine hohe Sicherheit gegen ein Ablösen von Schneidsegmenten auf. Die Schneidsegmente sind sicher gehaltert und können sich im Betrieb nicht axial verkanten oder radial verschieben.

## Patentansprüche

1. Sägeblatt mit austauschbaren Schneidsegmenten, umfassend ein kreisförmiges Stammblatt (1) mit am Aussenrand angeordneten, in regelmässigem Abstand voneinander radial ausgerichteten Ausnehmungen (7) und Schneidsegmente (2) mit jeweils einem Schneidkörper (4) und einem Segmentträger (3), der in einer der Ausnehmungen (7) mit Hilfe von lösbaren Befestigungsmitteln (5; 50) fixierbar ist, **dadurch gekennzeichnet**, dass die Ausnehmungen (7) derart ausgebildet sind, dass die Schneidsegmente (2) radial einsetzbar sind, dass die Befestigungsmittel (5; 50) axial anbringbar sind und dass Sicherungselemente (6) vorgesehen sind, welche ein axiales Verschieben der Segmentträger (3) in den Ausnehmungen (7) verhindern.

2. Vorrichtung nach Anspruch 1, dadurch gekennzeichnet, dass die Sicherungselemente (6) für jeden Segmentträger (3) wenigstens einen sich radial erstreckenden Passstift umfassen, der in der Ausnehmung (7) bzw. am Segmentträger (3) vorgesehen ist und mit einer korrespondierenden Bohrung am Segmentträger (3) bzw. im Stammblatt (1) zusammenwirkt.

3. Vorrichtung nach Anspruch 2, dadurch gekennzeichnet, dass für jeden Segmentträger (3) zwei Passstifte und zwei korrespondierende Bohrungen vorgesehen sind, die hintereinander angeordnet sind.

4. Vorrichtung nach einem der vorangehenden Ansprüche, dadurch gekennzeichnet, dass die Sicherungselemente (6) jeweils durch prismatische Führungen gebildet sind, welche am Sitz für den Segmentträger am Stammblatt und/oder an den Stirnseiten der Ausnehmungen bzw. an den Schmalseiten der Segmentträger ausgebildete prismatische Vorsprünge (61) und korrespondierende Nuten (62) an den Schmalseiten der Segmentträger bzw. Am Stammblatt und/oder an den Stirnseiten der Ausnehmungen umfassen.

5. Vorrichtung nach einem der vorangehenden Ansprüche, dadurch gekennzeichnet, dass die lösbaren Befestigungsmittel (5; 50) in axialen Durchsteckbohrungen befestigbar sind, welche jeweils durch Halbbohrungen (11) im Bereich der Ausnehmungen (7) im Stammblatt (1) und durch Halbbohrungen (31) in den Segmentträgern (3) gebildet sind, und dass die Befestigungsmittel (5; 50) derart ausgebildet sind, dass die Segmentträger (3) durch Spreizkräfte in den Ausnehmungen (7) fixiert sind.

6. Vorrichtung nach Anspruch 5, dadurch gekennzeichnet, dass die Befestigungsmittel (5) konisch ausgebildet sind und im hinteren Bereich des Konus gegenüber den Durchsteckbohrungen (7) ein Übermass von etwa 0,5 mm bis etwa 0,7 mm aufweisen und jeweils durch einen Vollniet bzw. durch zwei Halbniete gebildet sind.

7. Vorrichtung nach Anspruch 5, dadurch gekennzeichnet, dass die Befestigungsmittel (50) jeweils eine Durchsteckschraube (51) und eine Mutter (52) umfassen, welche beim Verschrauben eine Vorspannung des Segmentträgers (3) in der Ausnehmung (7) bewirken.

8. Vorrichtung nach Anspruch 7, dadurch gekennzeichnet, dass die Durchsteckschraube (51) einen konisch ausgebildeten Kopf aufweist, dass die Mutter (52) konisch ausgebildet ist, wobei der Kopf und die Mutter konische Anschlagflächen (15, 25) aufweisen, welche einen Neigungswinkel (α) von etwa 40° - 70°, vorzugsweise 60°, aufweisen, und dass die Halblöcher (11, 31) korrespondierende Anschlagbereiche aufweisen, welche einen geringeren Neigungswinkel besitzen.

9. Vorrichtung nach einem der Ansprüche 5 - 8, dadurch gekennzeichnet, dass die Befestigungsmittel (5; 50) in Drehrichtung (S) des Sägeblatts vor dem Segmentträger (3) angeordnet sind.

10. Motorisch antreibbare Schneidevorrichtung insbesondere zum Trennen von spröden Baustoffen wie beispielsweise armiertem oder nicht armiertem Beton oder Stein, gekennzeichnet durch ein Sägeblatt gemäss einem der vorangehenden Ansprüche.
